Europäisches Patentamt

European Patent Office

Office européen des brevets

(11) Publication number: **0 274 788**

A1

## EUROPEAN PATENT APPLICATION

(21) Application number: 87202483.1

(51) Int. Cl.⁴ **B60R 9/06** , B60D 1/14

(22) Date of filing: 11.12.87

(30) Priority: 17.12.86 NL 8603206

(43) Date of publication of application:
20.07.88 Bulletin 88/29

(84) Designated Contracting States:
BE DE FR GB NL

(71) Applicant: **Gaasbeek, Aris Jan**
**Blokkenweg 8**
**NL-6717 AC Ede(NL)**

Applicant: **van de Weerd, Aart**
**Parkweg 4**
**NL-6717 HT Ede(NL)**

(72) Inventor: **Gaasbeek, Aris Jan**
**Blokkenweg 8**
**NL-6717 AC Ede(NL)**
Inventor: **van de Weerd, Aart**
**Parkweg 4**
**NL-6717 HT Ede(NL)**

(54) **Carrying framework for drawn vehicles.**

(57) The invention relates to both an adjustable and a non-adjustable carrying framework for drawn vehicles, in particular for caravans, caravanettes, campers and (small) trailers. In the preferential design and construction according to the invention, the carrying framework, connected to the bottom and the back of the afore-mentioned drawn vehicles, is supplied with two breadthwise adjustable diagonal sections (20), one breadthwise cylindrical section (23), one lengthwise adjustable cylindrical section (12), one lengthwise adjustable cylindrical section (6) to be secured to the chassis (8) of the drawn vehicles with the aid of one diagonal section (7), one lengthwise adjustable cylindrical section (2) with a carrying-pole with spherical support structure (1) welded to it and various expedients.

# Carrying framework for drawn vehicles

The invention relates to both an adjustable and a non-adjustable carrying framework for drawn vehicles, in particular for caravans, caravanettes, campers and (small) trailers. In the preferential design and construction according to the invention, the carrying framework, connected to the bottom and the back of the afore-mentioned drawn vehicles, is supplied with two breadthwise adjustable diagonal sections, one breadthwise cylindrical section, one lengthwise adjustable cylindrical section, one lengthwise adjustable cylindrical section to be secured to the chassis of the drawn vehicles with the aid of one diagonal section, one lengthwise adjustable cylindrical section with a carrying-pole with spherical support structure welded to it and various expedients.

The invention proposes to meet the demand for an (adjustable) carrying framework of this type, which on the one hand is constructed in such a way, that it can be manufactured economically and at a payable cost price, while on the other hand its assembly to the chassis of the drawn vehicles has been engineered in such a way, that the required reliability of the entire structure is guaranteed. The construction of the carrying framework has been designed in such away as to allow the attachment of various types of luggage grids (a.o. bicycle racks), moreover the carrying framework has been provided with a point of attachment for stationing a spare wheel.

The preferential design and construction of the carrying framework for drawn vehicles conformable to the invention is characterized by its adjustability into various positions in height as well as breadth and length, by being equipped in all its designs with a point of attachment for a spare whweel and by the fact that the cylindrical section with its welded carrying-pole and spherical support structure can very easily be removed (a.o. in order to prevent theft and problems of storage).

Investigation has shown, that the (adjustable) carrying framework can be assembled to the bottom of almost every drawn vehicle which has been mentioned. This is due to the fact, that one can make use of the opening (points of attachment) incorporated in the most frequently occurring chasses. If necessary, appliances can be used.

The afore-mentioned sections of the carrying framework have been manufactured of thermically zinked steel. Since the framework, if necessary, can be supplied in loose parts, it can be transported economically. The assembly of the framework to the chassis will cause no problems for the average craftsman, nor even to a skilled handyman, since the assemblage of the framework will be clearly described.

In the preferential design and construction according to the invention, the construction is mainly composed of rectangular cylindrical sections, which is done to guarantee the solidity of the construction. Because of this, it is rendered impossible for luggage grids or, where appropriate, bicycle racks to topple over.

Considering the universality of the currently available types of luggage grids and bicycle racks the (adjustable) carrying framework according to the invention is preferably requipped with a spherical support structure. Other types of couplings, to be sure, also belong to the invention, but since they are non-paying for the time being, they will not be further described.

In the preferential design and construction according to the invention the carrying-pole with spherical support structure is connected to an adjustable cylindrical section of 40 by 40 by 4 mms by means of a weld-joint. In order to realize adjustability this section contains openings and is to be inserted into a second section of 50 by 50 by 4 mms. This section is connected to the chassis of the drawn vehicle and provided with an opening. Both sections are interconnected by means of a fastening device with a keeper. In order to guarantee the safety of the construction, this fastening device with keeper is locked by means of a sturdy cotter pin. In one of the non-preferential designs of the carrying framework according to the invention a spring-pressured locking device is used instead of a cotter pin lock, but since this method of locking is not safer and/or cheaper, it will not be described any further. If one should wish to remove the cylindrical section with its attached carrying-pole and spherical support structure --for instance to prevent theft or to store it away during the winter-- this can easily be done by means of this construction.

The second cylindrical section of 50 by 50 by 4 mms is provided with openings. These openings have been administered in order to allow the insertion of a third cylindrical section of 40 by 40 by 4 mms with openings. Because of this, the carrying framework can be adjusted in length. This third cylindrical section can also be attached to the top of the second cylindrical section. In the preferential design and construction according to the invention of the carrying framework, the third cylindrical section is attached to the bottom of the second cylindrical section by means of U-shaped bolts with self-securing lock-nuts. This design is preferable, because it provides ampler space for stationing a spare wheel. Since the second cylindrical section can be secured to the bottom as well as to the top or inside the third cylindrical section, an adjustable height of approximately 100 mms can be achieved and the preexisting openings (points of attachment) can be used optimally.

In order to allow the stationing of a spare wheel, the third cylindrical section has been provided with an opening. A specially broad conically shaped lock-nut and bolt are used to attach the spare wheel safely. This construction guarantees the solid attachment and locking of the spare wheel.

In the preferential design and construction according to the invention the third cylindrical section is connected to a breadthwise adjustable three-piece (steel) diagonal section of 45 by 45 by 4 mms. The three parts of the diagonal section and the third cylindrical section are connected at the exact centre by means of bolts and self-securing lock-nuts. In order to achieve a breadthwise adjustability of the carrying framework the three diagonal sections have been provided with slots. Further, the two outermost diagonal sections have been squarely welded at their ends by means of steel plates of 40 by 40 by 4 mms. Holes have been drilled through these both steel plates. Thus, the carrying framework is connected to the chassis of the drawn vehicle by means of bolts and self-securing locknuts. In this connection the pre-existing openings (points of attachment) in the chassis are made use of. The breadthwise adjustability of this construction can also be achieved at the far ends of the two diagonal sections. Since this form is no part of the preferantial design and construction, it is not described any further, but it should not be excluded from the invention.

The construction of the carrying framework can be classified as amply reliable. This classification has been arrived at by means of a calculation of the pressure which can be withstood by the construction, taking into account the spring action (shock absorbers) of the vehicles to be drawn. This calculation is based on the datum, that the weight of the luggage grid or bicycle rack to be transported added to the weight of three bicycles amounts to 120 kilograms. If the cylindrical section with its welded carrying-pole with spherical support structure is drawn out for 500 mms the construction can withstand a pressure of 300 kilograms. Other types of (steel) sections can also be used in the construction of the carrying framework, for instance if one should wish to impose a heavier load on the construction and therefore these are not excluded from the invention.

The drawings represent the carrying framework conformable to the invention in its preferential design and construction, in which:

fig.1 displays a side-view or front-view of the carrying framework when assembled,

fig.2 displays a rear-view of the framework as shown in fig.1,

fig.3 displays a top-view of the framework as shown in fig.1,

fig.4 displays an outline of the framework as shown in figs 1,2 and 3,

fig.5 displays the connection of the framework to the bottom of a not represented drawn vehicle, including the locking device (or cotter pin) which ensures the adjustability of the construction, see also fig.1, detail C

fig.6 displays the connection of the framework to the sides of the chassis of a not represented drawn vehicle, see also fig.1, detail A,

fig.7 displays the attachment of the diagonal sections to the rest of the framework at an angle of 90 degrees, see also fig.1, detail B,

fig.8 displays the attachment of a not represented spare wheel on top of the third cylindrical section, see also fig.1, detail D,

fig.9 displays a cross-section of the locking device with which the adjustable cylindrical section with its welded carrying-pole and spherical support structure is secured onto the second cylindrical section.

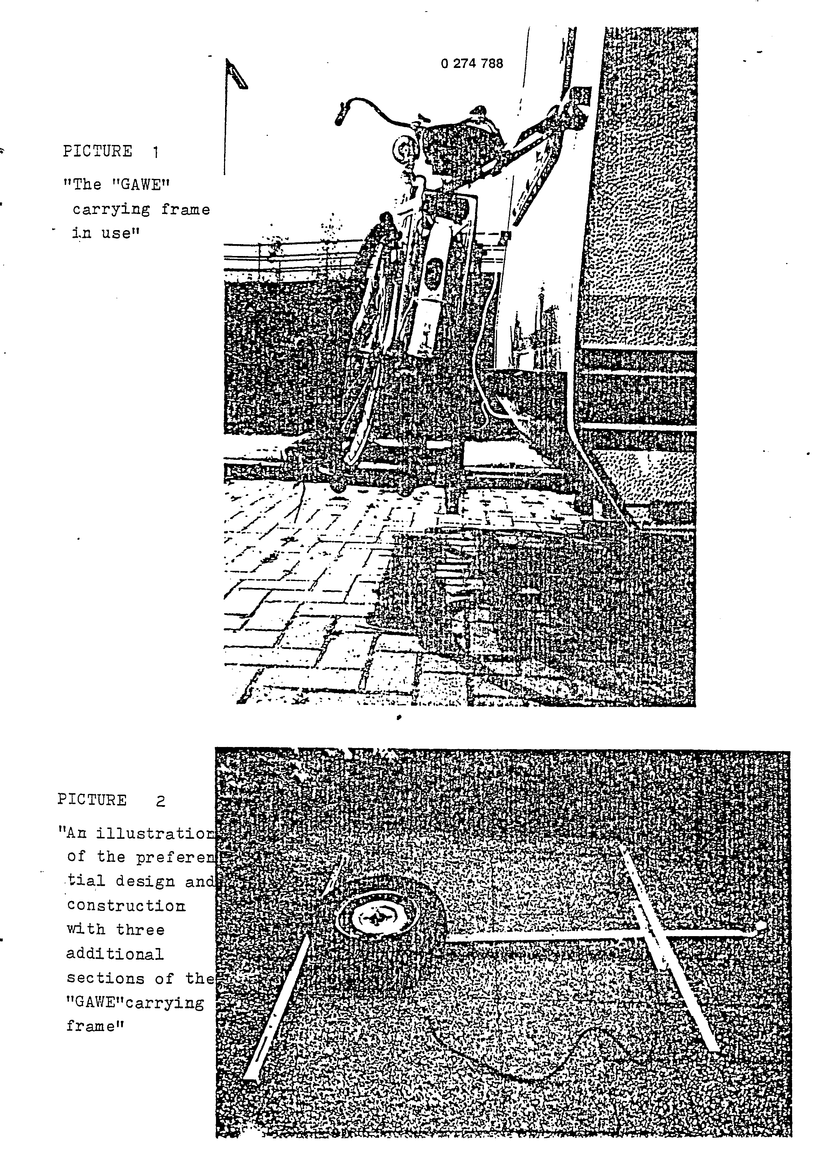

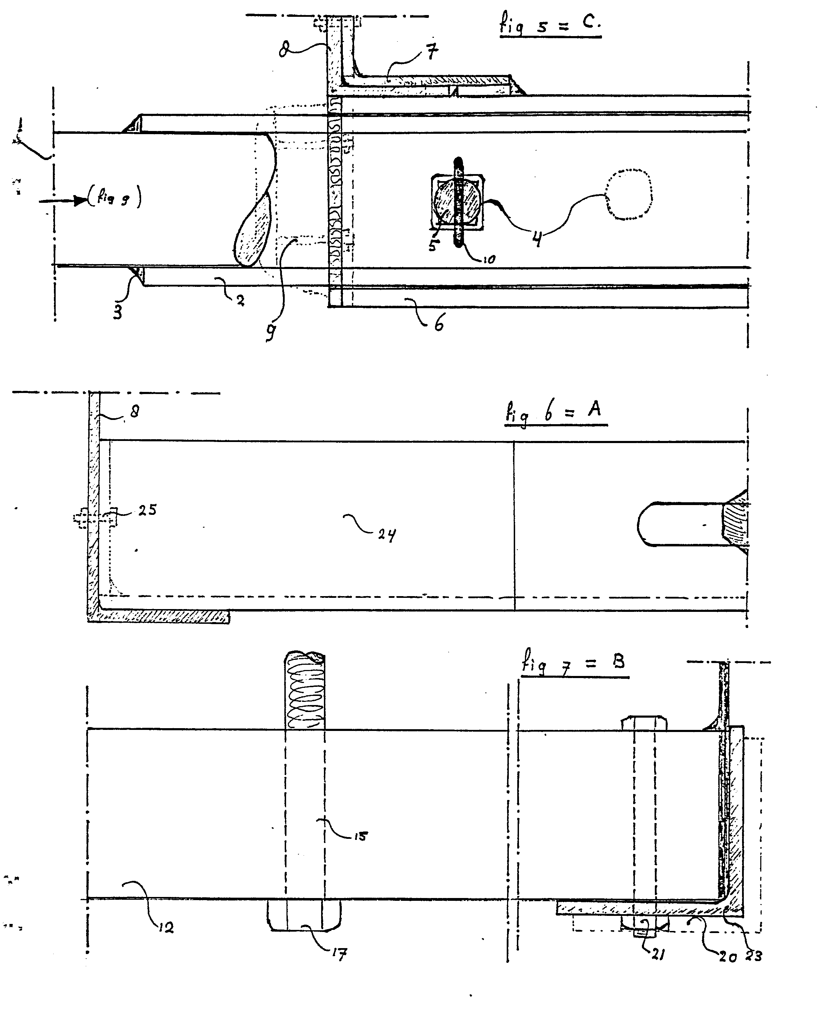

figs. 1,2 and 3 have been drawn to a scale of 1 to 10, in which figs. 5,6,7,8 and 9, which have been drawn at full actual size, are indicated by means of circles,

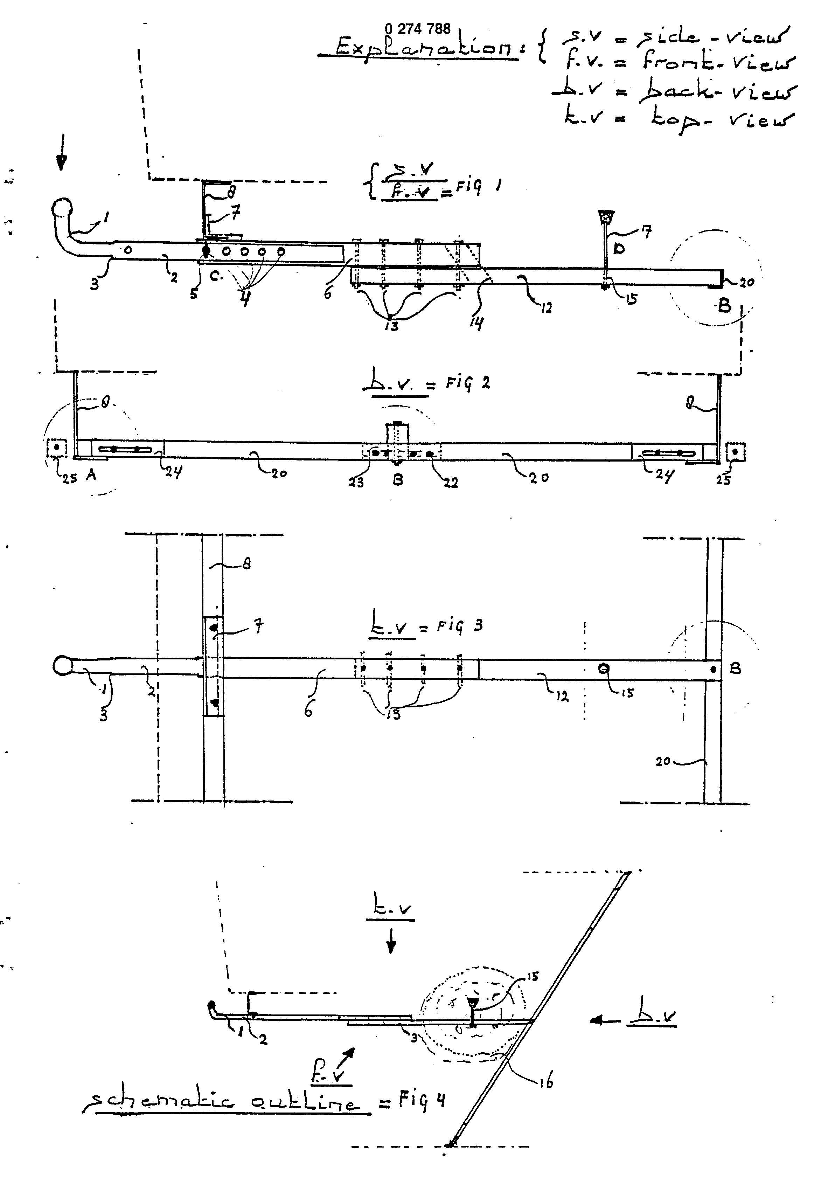

fig. 4 has been drawn to a scale of 1 to 20,

Figs. 1,3 and 4 display the carrying-pole with spherical support structure 1 on top of which the not represented bicycle rack or luggage grid can be placed. The carrying-pole with spherical support structure 1 has been welded 3 to the adjustable first cylindrical section 2 of 40 by 40 by 4 mms (see also figs. 1,5 and 9).

In order to be able to adjust the first cylindrical section 2 with its welded carrying-pole with spherical support structure 1, component 1-2 has been provided with openings 4 (see figs. 1 and 5). The locking device 5 serves to secure component 1-2 to the second cylindrical section 6 (see figs. 1,5 and 9).

The second cylindrical section 6 has been provided with an opening which serves to secure it onto component 1-2 by means of a locking device 5. Apart from this another opening has been administered to cylindrical section 6, which serves to secure component 1-2 in case it has to be pushed almost completely into cylindrical section 6, for instance when the carrying framework is not in use.

Cylindrical section 6 has been connected 7 to the chassis 8 of the drawn vehicle by means of a steel diagonal section. This connection is structurally required, due to the fact that the pressure of the framework, the grid and the luggage has to be divided reliably to chassis 8 (see also figs. 1,3 and 5). It is also conceivable that the connection 7 will be executed by means of aids and appliances. In order to maintain the universality of the preferential design and construction, however, these aids and appliances have not been incorporated in the drawings, yet they should not be excluded fronm the invention.

To one side of the cylindrical section 6 a provision has been made for including a power point 9 (indicated by means of a dotted line in fig.5), which serves to connect the lighting etc. of the bicycle rack or luggage grid to be placed on the carrying framework.

The locking device 5 consists of a securing pin with eye 10, which is locked by means of a cotter pin 11 (see fig.9). Instead of a cotter pin 11 a spring-pressured locking device can be used. This device has not been represented, because it is no part of the preferential design and construction, yet it should be included in the invention.

The third cylindrical section 12 has been secured to the bottom of the second cylindrical section 6 by means of U-shaped bolts and self-securing lock-nuts 13. Considering the fact that this section can be secured in different ways the carrying framework is by this heightwise adjustable (see figs. 1 and 3). It is also possible for the third cylindrical section 12 to be secured to the top of the second cylindrical section 6, but this non-preferential design and construction of the invention has not been incorporated in the drawings. The carrying framework can also be adjusted in length by pushing the third cylindrical section 12 into the second cylindrical section 6. Therefore the sections 6 and 12 have been provided with openings. In this form te sections 6 and 12 are secured by means of one or more bolts and self-securing lock-nuts. This form also has not been represented in the drawings, since it is no part of the preferential designe and construction of the invention. The invention allows a fourth design and construction by executing the cylindrical sections 6 and 12 in one length. When applying this form, the lengtened cylindrical section is snapped at a given point (see point 14, which has been indicated in fig.1 by means ofa dotted line). Needless to say that this form the adjustability of the carrying framework with respect to the cylindrical sections 6 and 12 is cancelled.

The third cylindrical section 12 has been provided with a point of attachment 15 for stationing a spare wheel 16 (see figs.1,3,7 and 8). To clarify matters, the spare wheel 16 has been indicated by means of a dotted line in fig. 4. The attachment of the spare wheel 16 onto the third cylindrical section 12 has been executed by means of a high quality steel bolt 17 and a specially broad conically shaped lock-nut 18. First, the bold 17 has been pushed through the point of attachment 15 and the opening of the spare wheel 16, next the wheel 16 has been secured by means of the lock-nut 18 in such a way, that it can be transported with extreme safety. The lock-nut 18 is preferably secured at the top by means of a cotter pin 19 (see fig.8).

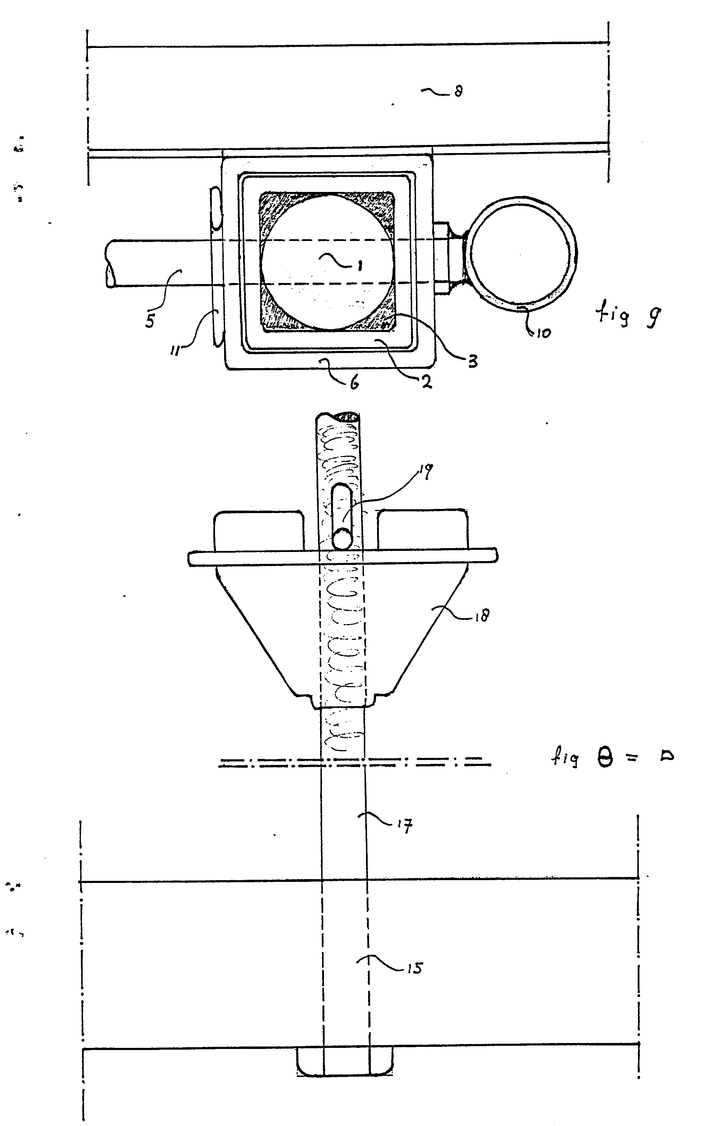

In the preferential design and construction according to the invention the third cylindrical section 12 has been joined to a steel diagonal section 23 of 45 by 45 by 4 mms by means of a steel bolt and self-securing lock-nut 21 (see fig.7). Further, the diagonal section 23 has been joined to two diagonal sections 20 of 45 by 45 by 4 mms by means of bolts and self-securing lock-nuts 22. In order to be able to adjust the carrying framework breadthwise, the diagonal sections 20 have been provided with slots (see figs.2 and 7, in which the adjustability has been indicated by means of dotted lines). A second breadthwise adjustability of the carrying framework according to the invention is possible by connecting additional diagonal sections 24 to the far ends of the afore-mentioned sections 20 by means of bolts and self-securing lock-nuts. These additional diagonal secitions 24 have been provided with slots to achieve the breadthwise adjustability of the carrying framework (see figs.2 and 6).

In the preferential design and construction according to the invention, both diagonal sections 20 have been connected to the chassis 8 of the drawn vehicle by means of steel plates 25. These steel plates 25 have been welded to the diagonal sections 20 and have been provided with openings. This part of the construction has been connected to the chassis 8 by means of bolts and self-securing lock-nuts (see figs.2 and 6). In fig.2 both steel plates 25 have been indicated by means of dotted lines in side-view. It may be necessary to use additional plates for an optimal use of the pre-existing openings (points of attachment) in the chassis 8 of the drawn vehicles. These additional plates, although not indicated in the drawings, should be included in the invention.

In the preferential design and construction according to the invention the construction of the carrying framework is executed by means of cylindrical and diagonal sections. It is possible to use other types of steel sections or other materials for this invention. However, since it is unfeasible to describe all of these types, suffice it to notify that whatever type of steel section or material is used, none of them should be excluded from the invention.

## Claims

1. Carrying framework for drawn vehicles, in particular caravans, caravanettes, campers and (small) trailers, which is characterized by being adjustable in length, breadth and height, which is executed with cylindrical and diagonal sections and which is preferentialy provided with a construction which is connected to the back and the bottom of the drawn vehicle. Component (1) is preferentially executed with a carrying-pole with spherical support structure and welded (3) to component (2). Component (2) is preferentially provided with openings (4) in order to achieve lengthwise adjustability. Component (2) is to be pushed into component (6), which has also been supplied with openings. Components (2) and (6) are preferentially secured by means of a locking device (5) with eye (10), which is locked by means of a cotter pin (11). Component (6) is connected to the chassis (8) of the drawn vehicle with preferentially a welded diagonal section (7); it is attached to the top of component (12) with U-shaped bolts and self-securing lock-nuts (13). This attachment ensures the adjustability of the carrying framework. Component (6) can also be secured to the bottom and the inside of component (12). In order to allow an internal securing of the components (6) and (12), these components have been provided with openings. In that case, its securing is executed by means of bolts and self-securing lock-nuts or a locking device. Component (12) has been provided with a point of attachment (15) for stationing a spare wheel (16). Component (12) is joined to a diagonal section (23) by means of a steel bolt with self-securing lock-nut (21) at an angle of 90 degrees. Component (23) in its turn is joined to two diagonal sections (20) with steel bolts and self-securing lock-nuts (22). In order to achieve breadthwise adjustability of the carrying framework, the components (20) and (23) have been provided with slots. Onto the components (20) steel plates (25) have been welded, in which holes have been drilled in order to allow attachment of the construction to the chassis (8). This attachment is achieved by means of steel bolts and self-securing lock-nuts. As far as possible the pre-existing openings (points of attachment) in the chassis (8) have been made use of in attaching the construction to the chassis (8). The use of aids and appliances is not excluded.

2. Carrying framework according to claim 1, characterized by the fact that the construction is executed with all conceivable constructively justifiable components and expedients.

3. Carrying framework according to claims 1 and 2, characterized by the fact that the construction is executed with all possible types of attachment points for placing a bicycle rack or luggage grid.

4. Carrying framework according to claims 1,2 and 3, characterized by the fact that the construction is executed with whatever possible adjustability, in length, breadth as well as height.

5. Carrying framework according to claims 1, 2 and 3, characterized by the fact that the construction is executed with all conceivable and possible components or, in other words, in all designs and constructions whatever is possible, in such a way that the carrying framework construction conformable the invention is developed for connecting to the bottom or behind all marks and types of drawn vehicles, in particular caravans, caravanettes, campers and small trailers. Only the preferential design and construction is represented in the drawings.

0 274 788

PICTURE 1

"The "GAWE"
carrying frame
in use"

PICTURE 2

"An illustration
of the preferen
tial design and
construction
with three
additional
sections of the
"GAWE"carrying
frame"

0 274 788

Explanation: { s.v = side-view
f.v. = front-view
b.v = back-view
t.v = top-view

{ s.v / f.v = Fig 1

b.v = Fig 2

t.v = Fig 3

b.v

b.v

f.v

schematic outline = Fig 4

0 274 788

*fig 5 = C.*

*fig 6 = A*

*fig 7 = B*

fig 9

fig 8 = D

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 569 086 (B. ZENK) * Column 1, line 58 - column 3, line 19; figures 1-4 * | 1-5 | B 60 R    9/06 B 60 D    1/14 |
| A | FR-A-2 486 001 (H. ROZ) * Pages 1-2; figures 1-2 * | 1-3,5 | |
| A | US-A-3 353 842 (C. LEWIS) * Column 2, line 67 - column 3, line 64; figure 2 * | 1 | |
| A | US-A-3 494 493 (R. FOWLER) * Abstract; figures 1-2 * | 1 | |
| A | EP-A-0 037 599 (BULTEN-LUCAS) * Abstract; figures 1-2 * | 1,3 | |

TECHNICAL FIELDS
SEARCHED (Int. Cl.4)

B 60 D
B 60 R
B 62 D

The present search report has been drawn up for all claims

| Place of search | Date of completion of the search | Examiner |
|---|---|---|
| THE HAGUE | 16-03-1988 | LINTZ C.H. |